# EUROPEAN PATENT APPLICATION

(11) **EP 4 742 729 A1**
(43) Date of publication of application: **13.05.2026**
(21) Application number: 23943978.9
(22) Date of filing: 03.07.2023
(51) Int. Cl.: H04W 24/02

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Penza, Giancarlo
(86) International application number: PCT/CN2023/105543
(87) International publication number: WO 2025/007244

(57) **Abstract**

Provided are a communication method and a communication apparatus. The method comprises: a terminal device sends first information to a first network element, wherein the first information comprises access stratum (AS) data collected by the terminal device. The method in the embodiments of the present application enables the network side to obtain the AS data collected by the terminal device.

## Description

### TECHNICAL FIELD

The present disclosure relates to the technical field of communications, and more particularly to a method and device for communication.

### BACKGROUND

With the development of communication technologies, an artificial intelligence (AI) model can be adopted in some communication systems to perform some operations (such as performing one or more radio access network (RAN) functions).

A network device needs to use access stratum (AS) data and application layer data collected by a terminal device when training the AI model. However, the network device is currently unable to acquire the AS data collected by the terminal device.

### SUMMARY

The embodiments of the present disclosure provide a method and device for communication. The various aspects involved in the embodiments of the present disclosure are introduced below.

In a first aspect, a method for communication is provided, and the method includes the following operation. A terminal device sends first information to a first network element, and the first information includes AS data collected by the terminal device.

In a second aspect, a method for communication is provided, and the method includes the following operation. A first network element receives first information from a terminal device, and the first information includes AS data collected by the terminal device.

In a third aspect, a method for communication is provided, and the method includes the following operation. A second network element sends third information a first network element, and the third information is used to subscribe to a first event of the first network element.

In a fourth aspect, a method for communication is provided, and the method includes the following operation. A third network element sends third information a first network element, and the third information is used to subscribe to a first event of the first network element.

In a fifth aspect, a method for communication is provided, and the method includes the following operation. A fourth network element receives fifth information from a terminal device, and the fifth information is used to request reporting of AS data of the terminal device.

In a sixth aspect, a device for communication is provided, and the device includes a sending unit. The sending unit is configured to send first information to a first network element. The first information includes AS data collected by the device.

In a seventh aspect, a device for communication is provided, and the device includes a receiving unit. The receiving unit is configured to receive first information from a terminal device. The first information includes AS data collected by the terminal device.

In an eighth aspect, a device for communication is provided, and the device includes a sending unit. The sending unit is configured to send third information to a first network element. The third information is used to subscribe to a first event of the first network element.

In a ninth aspect, a device for communication is provided, and the device includes a sending unit. The sending unit is configured to send third information to a first network element. The third information is used to subscribe to a first event of the first network element.

In a tenth aspect, a device for communication is provided, and the device includes a receiving unit. The receiving unit is configured to receive fifth information from a terminal device. The fifth information is used to request reporting of AS data of the terminal device.

In an eleventh aspect, a device for communication is provided, and the device includes a memory and a processor. The memory is configured to store a program, and a processor is configured to call the program from the memory to cause the device to perform the method in any aspect of the first aspect to the fifth aspect.

In a twelfth aspect, a chip is provided, and the chip includes a processor. The processor is configured to call a program from a memory to cause a device equipped with the chip to perform the method in any aspect of the first aspect to the fifth aspect.

In a thirteenth aspect, a computer-readable storage medium is provided, which has stored thereon a program. The program causes a computer to perform the method in any aspect of the first aspect to the fifth aspect.

In a fourteenth aspect, a computer program product is provided, which includes a program. The program causes a computer to perform the method in any aspect of the first aspect to the fifth aspect.

In a fifteenth aspect, a computer program is provided. The computer program causes a computer to perform the method in any aspect of the first aspect to the fifth aspect.

In the embodiments of the present disclosure, the first information includes the AS data collected by the terminal device, and the terminal device sends the first information to the first network element, so that a network side obtains the AS data collected by the terminal device, which ensures that the network side has sufficient data to train an AI model, thereby improving the performance of the AI model.

### BRIEF DESCRIPTION OF THE DRAWINGS

FIG. 1 is a schematic diagram illustrating a wireless communication system to which an embodiment of the present disclosure is applied.
FIG. 2 is a schematic diagram illustrating a neural network structure according to an embodiment of the present disclosure.
FIG. 3 is a schematic diagram illustrating a convolutional neural network according to an embodiment of the present disclosure.
FIG. 4 is a schematic diagram illustrating a 5th generation (5G) network architecture according to an embodiment of the present disclosure.
FIG. 5 is a schematic diagram illustrating a data collection application function (DCAF) architecture according to an embodiment of the present disclosure.
FIG. 6 is a schematic flowchart illustrating a data collection and reporting process according to an embodiment of the present disclosure.
FIG. 7 is a schematic flowchart illustrating a communication method according to an embodiment of the present disclosure.
FIG. 8 is a schematic diagram illustrating a DCAF architecture according to another embodiment of the present disclosure.
FIG. 9 is a schematic flowchart illustrating a communication method according to another embodiment of the present disclosure.
FIG. 10 is a schematic structural diagram illustrating a communication device according to an embodiment of the present disclosure.
FIG. 11 is a schematic structural diagram illustrating a communication device according to another embodiment of the present disclosure.
FIG. 12 is a schematic structural diagram illustrating a communication device according to yet another embodiment of the present disclosure.
FIG. 13 is a schematic structural diagram illustrating a communication device according to yet another embodiment of the present disclosure.
FIG. 14 is a schematic structural diagram illustrating a communication device according to yet another embodiment of the present disclosure.
FIG. 15 is a schematic structural diagram illustrating a device according to an embodiment of the present disclosure.

### DETAILED DESCRIPTION

The technical solutions of the present disclosure will be described below with reference to the drawings.

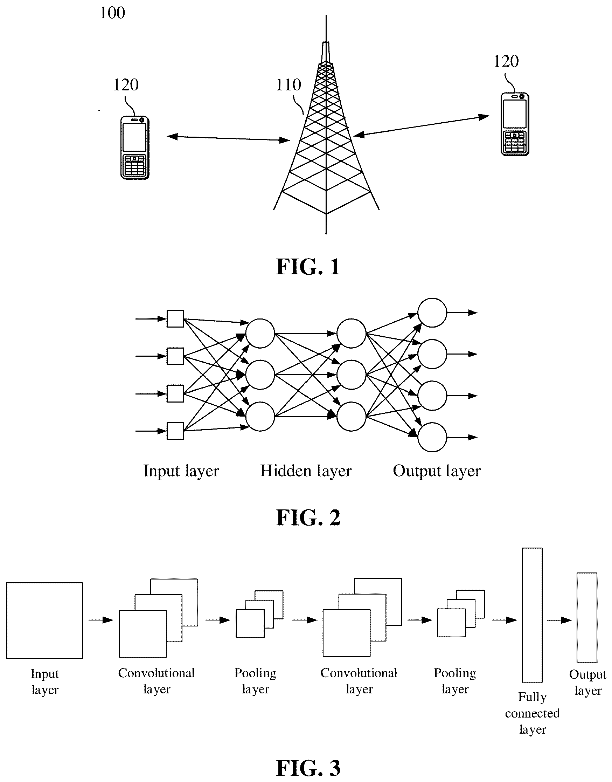

FIG. 1 is a schematic diagram illustrating a wireless communication system to which an embodiment of the present disclosure is applied. The wireless communication system 100 may include a network device 110 and a user equipment (UE) 120. The network device 110 may communicate with the UE 120. The network device 110 may provide communication coverage for a specific geographic area, and may communicate with the UE 120 located in the coverage. UE 120 may access a network (such as a wireless network) through the network device 110.

FIG. 1 exemplarily illustrates one network device and two UEs. Optionally, the wireless communication system 100 may include multiple network devices, and the coverage area of each network device may include other numbers of terminal devices, which is not limited by the embodiments of the present disclosure. Optionally, the wireless communication system 100 may further include other network entities such as a network controller, a mobility management entity or the like, which is not limited in the embodiments of the present disclosure.

It should be understood that the technical solutions of the embodiments of the present disclosure can be applied to various communication systems, such as a 5G system or a new radio (NR) system, a long term evolution (LTE) system, an LTE frequency division duplex (FDD) system, an LTE time division duplex (TDD), and the like. The technical solutions provided in the present disclosure can also be applied to a future communication system, such as a sixth generation mobile communication system, a satellite communication system, or the like.

The UE in the embodiments of the present disclosure may also be referred to as a terminal device, an access terminal, a subscriber unit, a user station, a mobile site, a mobile station (MS), a mobile terminal (MT), a remote station, a remote terminal, a mobile device, a user terminal, a terminal, a wireless communication device, a user agent, or user equipment. The UE in the embodiments of the present disclosure may be a device providing a user with voice and/or data connectivity and capable of connecting people, objects, and machines, such as a handheld device or a vehicle-mounted device with a wireless connection function. The UE in the embodiments of the present disclosure may be a mobile phone, a tablet computer (Pad), a notebook computer, a palmtop computer, a mobile internet device (MID), a wearable device, a virtual reality (VR) device, an augmented reality (AR) device, a wireless terminal for industrial control, a wireless terminal for self driving, a wireless terminal for remote medical surgery, a wireless terminal for smart grid, a wireless terminal for transportation safety, a wireless terminal for smart city, a wireless terminal for smart home, or the like. Optionally, the UE may be used to function as a base station. For example, the UE may function as a scheduling entity, which provides a sidelink signal between UEs in vehicle-to-everything (V2X), device-to-device (D2D), or the like. For example, a cellular phone and a vehicle communicate with each other through the sidelink signal. The cellular phone and a smart household device can communicate with each other without relaying a communication signal through the base station.

The network device in the embodiments of the present disclosure may be a device for communicating with the UE, and the network device may also be referred to as an access network device or a wireless access network device, e.g., the network device may be a base station. The network device in the embodiments of the present disclosure may refer to a radio access network (RAN) node (or device) that connects the UE to the wireless network. The base station may broadly refer to or be replaced with the followings, such as: a NodeB, an evolved NodeB, (eNB), a next generation NodeB (gNB), a relay station, an access point, a transmitting and receiving point (TRP), a transmitting point (TP), a master station (MeNB), a secondary station (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, or the like. The base station may be a macro base station, a micro base station, a relay node, a donor node, or the like, or a combination thereof.

In some embodiments, the network device may be fixed or mobile. For example, a helicopter or an unmanned aerial vehicle (UAV) may serve as a mobile network device. At least one cells may move based on a location of the mobile network device. In another example, a helicopter or an UAV may serve as a device communicating with another network device. In some embodiments, the network device may refer to a CU or a DU. Alternatively, the network device may include a CU and a DU. The network device may further include an AAU.

It should be understood that the network device may be deployed on land, including indoor or outdoor, handheld, or onboard; the network device may be deployed on water; the network device may further be deployed on an airborne aircraft, balloon, satellite, and the like. The scenarios in which the network device is deployed are not limited by the embodiments of the present disclosure.

It should also be understood that all or some functions of the network device and the UE in the disclosure may also be implemented through a software function run on hardware, or through a virtual function instantiated on a platform (such as a cloud platform).

In recent years, an AI research represented by a neural network has achieved great results in many fields, and the AI research will also play an important role in people's production and life for a long time in the future. As illustrated in FIG. 2, a basic structure of a basic neural network includes: an input layer, a hidden layer, and an output layer. A sample is input into the input layer, then processed through the hidden layer, and the final result is generated in the output layer. In the structure of the neural network, each node represents a processing unit, which may be considered as simulating a neuron. Multiple neurons form a layer of neural network, and multi-layer information transmission and processing construct a whole neural network.

With the continuous development of a research for the neural network, in recent years, a neural network deep learning algorithm has been proposed, and more hidden layers have been introduced. Feature learning is performed by training the neural network with multiple hidden layers layer by layer, which greatly improves a learning and processing capability of the neural network and is widely used in pattern recognition, signal processing, optimal combination, anomaly detection and so on. Similarly, with the development of deep learning, a convolutional neural network has been further studied. As illustrated in FIG. 3, in the convolutional neural network, a basic structure of the convolutional neural network may include an input layer, one or multiple convolution layers, one or multiple pooling layers, a fully connected layer and an output layer. Through introduction of the convolution layer(s) and the pooling layer(s), the sharp increase of network parameters is effectively controlled, the number of parameters is limited, characteristics of a local structure are excavated, and robustness of the algorithm is improved.

With the continuous development of a communication technology, a current wireless communication system is increasingly emphasizing wide applicability to various scenarios and efficient utilization of limited resources. However, most work in the current wireless communication system is still completed based on theoretical modeling of an actual communication environment or simple parameter selection, and a gain brought by this working mode is gradually weakening in variable scenarios and complex communication environments. In view of this situation, it is necessary to adopt a new approach and idea that is combined with a traditional wireless communication theory and system, so as to find a new way, break through a performance bottleneck, and further improve the performance of the wireless communication system.

A study (RP-212708) on an AI/machine learning (ML)-enabled wireless air interface technology was initiated in release 18 (R18) RAN1 of a communication standard protocol, and the main research use cases include:
- AI + channel state information (CSI) feedback: Utilizing the AI/ML technology to compress and decompress CSI, reducing air interface transmission overhead and enhancing the accuracy of CSI feedback information;
- AI + beam management: Utilizing the AI/ML technology to predict beam information in a time domain/spatial domain, reducing measurement overhead and latency, and improving the accuracy of beam selection;
- AI + positioning technology: Utilizing the AI/ML technology to predict location information of the UE, enhancing the accuracy of UE location information in a non-line-of-sight (NLOS) scenario.

RAN2 focuses on the life cycle management of the AI model based on the RAN1 use cases, which includes: model generation, model deployment, model transmission, model monitoring, model updating, and the like. In the current RAN2 discussion, there is an option for the AI model to be generated in a core network or a third-party server. In this scenario, the third-party server or the core network needs to monitor the operation of the AI model on the UE side in real time, so as to update the model in a timely manner and ensure the efficient operation of the communication system.

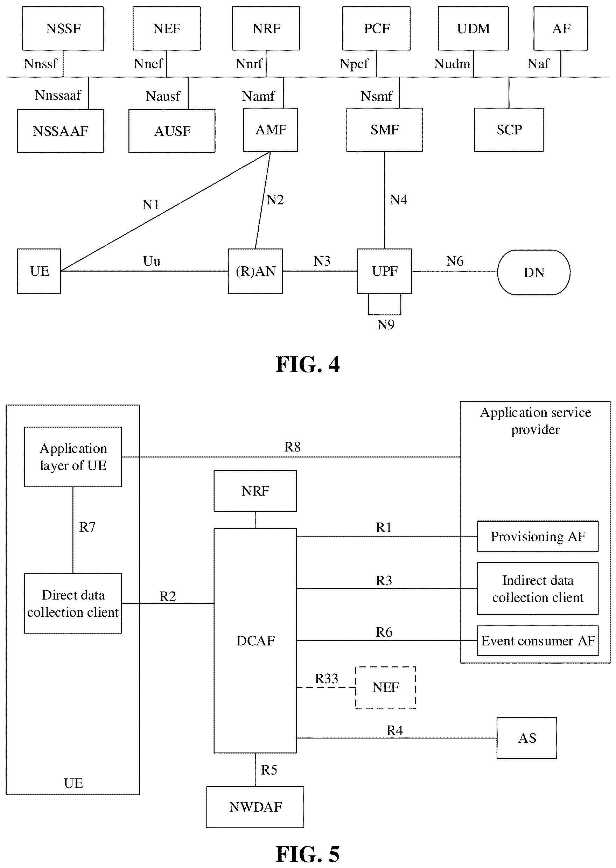

FIG. 4 is a schematic diagram illustrating a 5G system (5GS) architecture, the 5G network architecture includes: a network slice selection function (NSSF), a network exposure function (NEF), a network repository function (NRF), a policy control function (PCF), a unified data management (UDM), an application function (AF), a network slice-specific authentication and authorization function (NSSAAF), an authentication server function (AUSF), an access and mobility management function (AMF), a session management function (SMF), a service communication proxy (SCP), a UE, a radio access network (RAN), a user plane function (UPF), a data network (DN), and other network elements.

As illustrated in FIG. 4, the UE may connect to the AN through an Uu interface to interact access layer messages and transmit wireless data, and the UE may connect to the AMF through a N1 interface to interact none-access stratum (NAS) messages. The AMF is the mobility management function in the core network, and the SMF is the session management function in the core network. In addition to mobility management for the UE, the AMF is also responsible for forwarding a message related to session management between the UE and the SMF. The PCF is the policy management function in the core network, which is responsible for formulating policies related to the mobility management, session management, billing for the UE. The UPF is the user plane function in the core network, which may transmit data to an external data network through a N6 interface, and transmit data to the AN through a N3 interface.

In addition, the 5G system adds a network data analytics function (NWDAF) to the core network, the NWDAF may collect data from various core network elements and network management systems for big data statistics, analysis, or intelligent data analysis, so as to obtain analytical or predictive data from a network side, thereby assisting various network elements in more effectively controlling the access of the UE based on data analysis results.

FIG. 5 is a schematic diagram illustrating a DCAF architecture according to an embodiment of the present disclosure. A DCAF network element provides a data collection and reporting service, which may meet requirements of a NWDAF network element to collect data directly or indirectly from an application layer of the UE (such as an application of the UE) for analysis. At the same time, the other AFs (either inside or outside the 5GS) can subscribe to the services of the DCAF, so as to collect some of the application layer data that the AF itself needs from the UE. The architecture for connecting between DCAF network element and other network elements is illustrated in FIG. 5, and the DCAF can be deployed within or outside a trusted domain. A function of each network element is as follows.

For each event that needs to be provided to an event consumer, a provisioning AF sends a set of configuration information to the DCAF, which may include the following configuration parameters: an event identification (ID) need to be provided, an external application ID used by a data collection client when reporting data to the DCAF, an internal application ID corresponding to a consumer subscribing to the event from the DCAF, a parameter reported by the UE to the DCAF, and how to process the collected data, and so on. The DCAF provides a data collection and reporting configuration to a direct data collection client or an indirect (or non-direct) data collection client through an R2 interface and an R3 interface (or referred to as a reference point R2 and a reference point R3) based on the configuration information. Further, the DCAF receives data reported by the UE through the same interfaces (the R2 interface and the R3 interface) based on the configuration information. The data collection and reporting configuration includes the external application ID and the parameter to be collected.

The direct data collection client is responsible for collecting relevant data in the UE and reporting the relevant data to the DCAF through the R2 interface. An application service provider (ASP) may collect data from the application layer of the UE through an R8 interface, and the indirect data collection client may send the data to the DCAF through the R3 interface.

An application server (AS) instance within or outside the trusted domain may also collect data and report the data to the DCAF through an R4 interface. In the DCAF architecture, the NWDAF acts as the consumer, and when the DCAF has processed the collected data, the DCAF may send the processed data to the NWDAF through an R5 interface for subsequent analysis by the NWDAF. With the corresponding data collection and reporting configuration, the UE data collected by the DCAF may also be provided to an event consumer AF through an R6 interface.

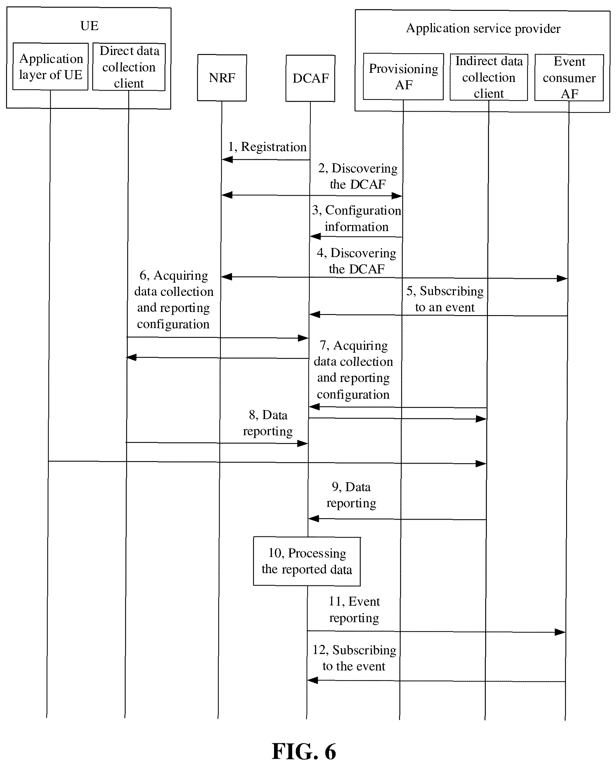

Data collection and reporting can also be carried out based on the DCAF architecture illustrated in FIG. 5. FIG. 6 is a schematic flowchart illustrating a data collection and reporting process according to an embodiment of the present disclosure. The data collection and reporting process may include the following operations.

At operation 1, the DCAF is registered with the NRF. When registering the DCAF with the NRF, a list of event IDs need to be included, the list of event IDs may represent events that can be provided to the event consumer.

At operation 2, the provisioning AF discovers the DCAF through the NRF.

At operation 3, for a specific event ID, the provisioning AF provides configuration information to the DCAF.

At operation 4, the event consumer AF discovers the DCAF through the NRF.

At operation 5, the event consumer AF subscribes, through the event ID and on demand, to an event that the DCAF can provide.

At operation 6, the direct data collection client acquires the data collection and reporting configuration from the DCAF, which mainly includes the external application identification (identifying a UE application to which the configuration belongs) and the parameter need to be collected.

At operation 7, the indirect data collection client acquires the data collection and reporting configuration from the DCAF, which mainly includes the external application identification (identifying the UE application to which the configuration belongs) and the parameter need to be collected.

At operation 8, the direct data collection client sends the collected data to the DCAF through the R2 interface.

At operation 9, the application layer of the UE sends the collected data to the application service provider, and the indirect data collection client sends the data to the DCAF through the R3 interface.

At operation 10, the DCAF processes the data reported by the UE based on the configuration information from the provisioning AF.

At operation 11, the DCAF reports the event to the event consumer AF based on the event ID.

At operation 12, the event consumer AF subscribes to the event from the DCAF.

The above DCAF architecture can only support the collection of data from the application layer of the UE, and the sending of data to the NWDAF network element in the core network or a third-party AF. However, when discussing the use of the AI model in a wireless air interface on a RAN side, it is necessary to collect the AS data measured by the UE to train the AI model, in order to ensure the performance of the AI model. However, the third-party AF or the core network element is currently unable to acquire the AS data of the UE.

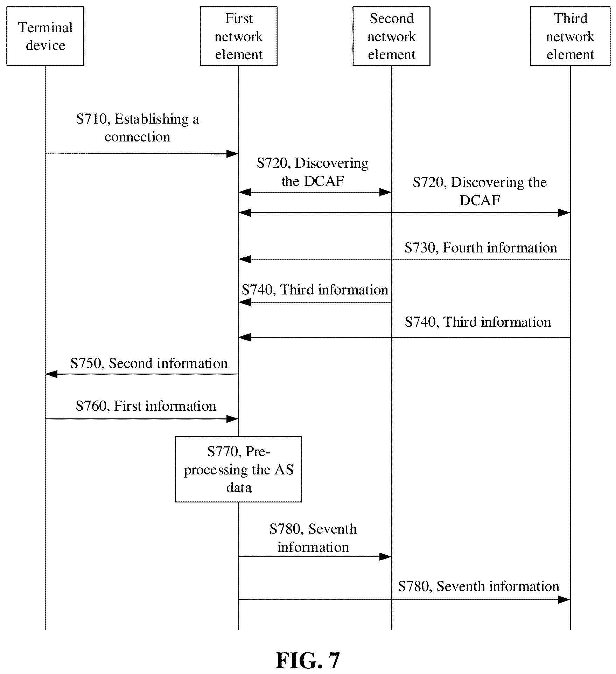

To address at least one of the above technical problems, the present disclosure provides a method and device for communication, so that the network side obtains the AS data collected by the terminal device, which ensures that the network side has sufficient data to train an AI model, thereby improving the performance of the AI model. The examples of the embodiments of the present disclosure are described below in detail with reference to FIG. 7 to FIG. 9.

FIG. 7 is a schematic flowchart illustrating a communication method according to an embodiment of the present disclosure. The method 700 illustrated in FIG. 7 includes operation S760.

At S760, a terminal device sends first information to a first network element.

The first network element may be a DCAF. Optionally, the first information may include AS data collected by the terminal device.

Optionally, the AS data may include at least one of: original channel measurement, a feature vector of current CSI, a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information (of the terminal device), herein K is an integer.

In the present disclosure, the terminal device may send the first information to the first network element in multiple ways.

In some embodiments, the terminal device may include a first module and a second module. The first module may send the AS data to the second module through a first interface; and the second module may send the first information to the first network element through a second interface.

Optionally, the first module may be a modem. Optionally, the second module may be a direct data collection client. Optionally, the first interface may be an interface (or referred to as a reference point) between the first module and the second module.

In some embodiments, the terminal device may include a first module and a second module. The first module may send the AS data to an application layer of the terminal device; the application layer may send the AS data to the second module through a third interface; and the second module may send the first information to the first network element through a second interface.

In some embodiments, the terminal device may include a first module. The first module may send the AS data to an application layer of the terminal device; the application layer may send the AS data to a third module through a fourth interface; and the third module may send the first information to the first network element through a fifth interface.

Optionally, the third module may be configured in a third network element. Optionally, the third network element may be an application service provider. Optionally, the third module may be an indirect data collection client.

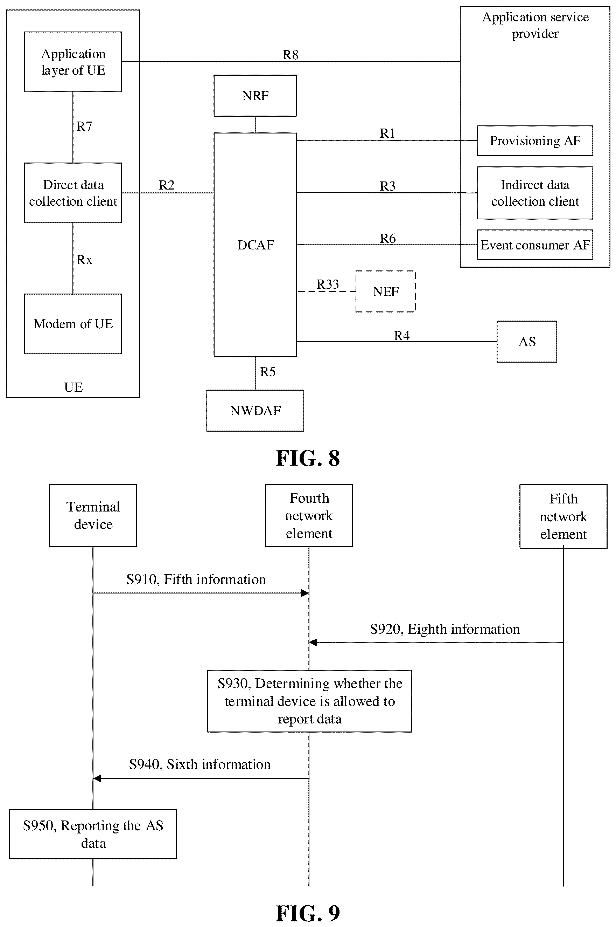

In some embodiments, the DCAF architecture illustrated in FIG. 5 may be enhanced, so as to enable the terminal device to send the first information to the first network element in multiple ways mentioned above. FIG. 8 is an example of an enhanced DCAF architecture.

As illustrated in FIG. 8, an Rx interface (i.e., the first interface mentioned above) may be added newly in the UE between the direct data collection client and the modem.

For example, the modem of the UE may send the AS data of the UE to the direct data collection client through the Rx interface, and the direct data collection client may send the AS data to the DCAF through an R2 interface.

For example, the modem of the UE may send the AS data of the UE to the application layer firstly; the application layer of UE may send the AS data to the direct data collection client through an R7 interface; and the direct data collection client may send the AS data to the DCAF through the R2 interface.

For example, the modem of the UE may send the AS data of the UE to the application layer firstly; the application layer of UE may send the AS data to the indirect data collection client through an R8 interface; and the indirect data collection client may send the AS data to the DCAF through an R3 interface.

In some embodiments, the method 700 may also include operation S750 before S760.

At S750, the first network element sends second information to the terminal device.

Optionally, the second information may indicate configuration information for the terminal device to perform data reporting. Optionally, the second information may be the configuration information for the terminal device to perform data reporting, or the second information may include the configuration information for the terminal device to perform data reporting.

Optionally, the configuration information may include at least one of: data required to be reported by the terminal device, or an AI operation required to be performed by the terminal device.

For example, the data required to be reported by the terminal device may include at least one of: original channel measurement, a feature vector of current CSI, a compressed bit stream, an RSRP of layer 1, best K beam information, measurement information of a positioning reference signal, a channel impulse response, a power delay profile, a line-of-sight state, a non-line-of-sight state, TOA, or position information.

For example, the AI operation required to be performed by the terminal device may include at least one of: a CSI feedback, a beam management, or a positioning.

For example, the data capable of being collected by the UE and corresponding to each AI operation may be shown in Table 1 below.

**Table 1: Data capable of being collected by UE and corresponding to each AI**

| Information | Source | Description |
|---|---|---|
| CSI feedback | UE AS layer | UE AS layer data to be collected from UE |
| original channel measurement | | |
| feature vector of current CSI | | |
| compressed bit stream | | |
| beam management | | |
| layer 1-RSRP | | |
| best K beam information | | |
| positioning | | |
| measurement information of positioning reference signal | | |
| channel impulse response | | |
| power delay profile | | |
| line-of-sight/non-line-of-sight state | | |
| time of arrival | | |
| position coordinates of UE | | |

In some embodiments, the method 700 may also include operation S740 before S760.

At S740, the first network element receives third information from a second network element or a third network element.

Optionally, the second network element may be a network function (NF). Optionally, the third network element may be an application service provider (ASP).

Optionally, the third information may be used to subscribe to a first event of the first network element.

Optionally, the first event may be an AS data reporting event of the terminal device. For example, the first event may collect the AS data of the UE through a third-party AF or configuration of the core network element.

Optionally, definition of the first event may include at least one of: a function of an event (or a name of the event), a description of the event, or a network element with a capability of the event.

Optionally, the third information may include an event identification of the first event. For example, the second network element or the third network element may subscribe to the first event from the first network element through the event identification of the first event.

For example, the current DCAF only supports collecting the application layer data of the UE. Therefore, to enhance the DCAF, i.e., enable the existing DCAF architecture to collect the AS data of the UE, an event (i.e., the first event) may be added newly. The event may be defined as shown in Table 2 below.

**Table 2: Definition of Event**

| Function of event | Description of event | Network element with capability of the event |
|---|---|---|
| UE AS data collection | Collection of AS data from a UE side involves scenarios such as a CSI feedback, a beam management, a positioning technology, and the like. The collected data may be used by a third-party server or a core network element for training/inference/model performance monitoring of an AI model used on a RAN side. | DCAF |

In some embodiments, the method 700 may also include operation S730 before S760.

At S730, the third network element sends fourth information to the first network element.

Optionally, the fourth information may indicate configuration information required to acquire AS data of a terminal device.

Optionally, the fourth information may include at least one of: an event identification, data required to be reported by the terminal device, an AI operation required to be performed by the terminal device, or a pre-processing mode of the data.

In some embodiments, the method 700 may also include operation S720 before S760.

At S720, the second network element or third network element discovers the DCAF that supports the AS data collected by terminal device.

For example, the second network element or third network element may discover, through the event identification of the first event, the DCAF that supports the AS data collected by the terminal device.

In some embodiments, the method 700 may also include operation S710 before S760.

At S710, the terminal device establishes a connection with the first network element.

For example, when a network side indicates to the terminal device that the terminal is allowed to perform data collection related to a user plane (i.e., UP plane), the terminal device establishes an UP plane connection with the first network element.

In some embodiments, the method 700 may also include operation S770 after S760.

At S770, the first network element pre-processes the AS data.

Optionally, the pre-processing may include at least one of: anonymization, or normalization. For example, the DCAF can perform the anonymization and/or the normalization on the AS data, thereby desensitizing the data, and protecting the privacy of the terminal device.

In some embodiments, the method 700 may also include operation S780 after S760.

At S780, the first network element sends seventh information to a second network element or a third network element.

Optionally, the seventh information may include the AS data collected by the terminal device. For example, the DCAF may send the pre-processed data to a subscriber such as the core network element NF, the third-party server, and the ASP.

In the embodiments of the present disclosure, the first information includes the AS data collected by the terminal device, and the terminal device sends the first information to the first network element, so that the network side obtains the AS data collected by the terminal device, which ensures that the network side has sufficient data to train an AI model, thereby improving the performance of the AI model.

In the present disclosure, the terminal device may negotiate capabilities with the network side through a registration request process, to determine whether the terminal device is able to report data and to determine an allowed reporting mode. A capability negotiation process in the present disclosure is described below with reference to FIG. 9.

FIG. 9 is a schematic flowchart illustrating a communication method according to another embodiment of the present disclosure. The method 900 illustrated in FIG. 9 may include operation S910.

At S910, the terminal device sends fifth information to a fourth network element.

Optionally, the fourth network element may be an AMF.

Optionally, the fifth information may be used to request reporting of the AS data of the terminal device.

Optionally, the fifth information may include at least one of: an AI operation intended to be performed by the terminal device, a data reporting mode supported by the terminal device, or a parameter supported by the terminal device for reporting.

For example, the AI operations intended to be performed by the terminal device may include at least one of: a CSI feedback, a beam management, or a positioning.

For example, the data reporting mode supported by the terminal device may include at least one of: a reporting mode for a control plane, or a reporting mode for a user plane.

For example, the parameter supported by the terminal device for reporting may include at least one of: original channel measurement, a feature vector of current CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

In some embodiments, the method 900 may also include operation S920 after S910.

At S920, the fourth network element acquires eighth information through a fifth network element.

Optionally, the fifth network element may be a UDM.

Optionally, the eighth information indicates subscription information of the terminal device. Optionally, the eighth information may include at least one of: an AI operation allowed to be performed by the terminal device, a data reporting mode allowed to be performed by the terminal device, or a parameter allowed to be reported by the terminal device.

For example, the fourth network element may send requesting information to the fifth network element, in order to request the fifth network element to return the subscription information of the terminal device. In response to the requesting information, the fifth network element may send the eighth information to the fourth network element.

In some embodiments, the method 900 may also include operation S930 after S910.

At S930, the fourth network element determines whether the terminal device is allowed to report data.

Optionally, the fourth network element may determine whether to allow terminal device to report data based on the fifth information and eighth information. Optionally, the fourth network element may also determine the AI operation allowed to be performed by the terminal device, the allowed reporting mode, and/or the allowed reporting data (or parameter) based on the fifth eighth information and the eighth information. For example, the fourth network element may also determine at least one of the following items based on the fifth and eighth information: the AI operation allowed to be performed by the terminal device, the data reporting mode allowed to be performed by the terminal device, or the parameter allowed to be reported by the terminal device.

It should be noted that, at above S930, the determination of whether the terminal device is allowed to report data, the allowed AI operation, the allowed reporting mode, and/or the allowed reporting data (or parameter) is based on a capability of the terminal device itself (such as the fifth information including the AI operation intended to be performed by the terminal device, the reporting mode supported by the terminal device, and/or the parameter supported by the terminal device for reporting) and the subscription information of the terminal device (such as the eighth information).

After determining that the terminal device is allowed to report data, the terminal device does not report the data directly. It also requires the network device (such as the core network element or the third-party server) to subscribe to the corresponding event (such as the first event) through the method in each embodiment of the aforementioned method 700 and to send the configuration information for data reporting to the terminal device, and then the terminal device will report the data.

In some embodiments, the method 900 may also include operation S940 after S910.

At S940, the fourth network element sends sixth information to the terminal device.

Optionally, the sixth information may indicate that terminal device is allowed to report data.

Optionally, the sixth information may include at least one of: an AI operation allowed to be performed by the terminal device, a data reporting mode allowed to be performed by the terminal device, or a parameter allowed to be reported by the terminal device.

In some embodiments, the method 900 may also include operation S950 after S910.

At S950, the terminal device reports the AS data.

For example, the terminal device reports the AS data based on the sixth information. The specific process of reporting of the AS data may refer to the embodiments in the above method 700, and will not be repeated here.

It should be noted that the capability negotiation process illustrated in FIG. 9 above may be executed either individually or in conjunction with the method illustrated in FIG. 7 (for example, the method 900 is executed before the method 700), which is not limited by the embodiments of the present disclosure.

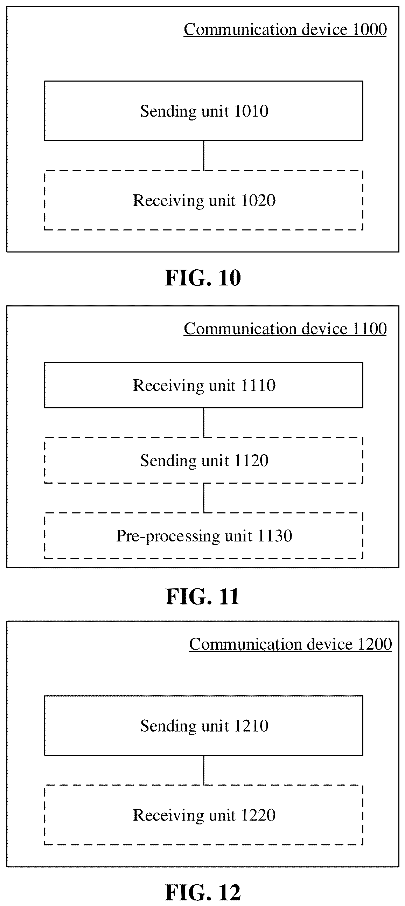

The method embodiments of the present disclosure are described in detail above with reference to FIG. 1 to FIG. 9, and the device embodiments of the present disclosure are described in detail below with reference to FIG. 10 to FIG. 15. It should be understood that the descriptions of the method embodiments correspond to those of the device embodiments, and therefore the parts not described in detail may be referred to the previous method embodiments.

FIG. 10 is a schematic structural diagram illustrating a communication device according to an embodiment of the present disclosure. As illustrated in FIG. 10, the device 1000 includes a sending unit 1010.

The sending unit 1010 is configured to send first information to a first network element. The first information includes AS data collected by the device.

Optionally, the device includes a first module and a second module. The sending unit 1010 is specifically configured to: send, by the first module, the AS data to the second module through a first interface; and, send, by the second module, the first information to the first network element through a second interface.

Optionally, the device includes a first module and a second module. The sending unit 1010 is specifically configured to: send, by the first module, the AS data to an application layer of the device; send, by the application layer, the AS data to the second module through a third interface; and send, by the second module, the first information to the first network element through a second interface.

Optionally, the device includes a first module. The sending unit 1010 is specifically configured to: send, by the first module, the AS data to an application layer of the device; send, by the application layer, the AS data to a third module through a fourth interface, herein the third module is configured in a third network element; and send, by the third module, the first information to the first network element through a fifth interface.

Optionally, the third network element is an application service provider, and/or the third module is an indirect data collection client.

Optionally, the first module is a modem, and/or the second module is a direct data collection client, and/or the first interface is an Rx interface.

Optionally, the AS data includes at least one of: original channel measurement, a feature vector of CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

Optionally, the device further includes a receiving unit 1020, which is configured to: before sending the first information to the first network element, receive second information from the first network element. The second information indicates configuration information for the device to perform data reporting.

Optionally, the configuration information includes at least one of: data (or parameter) required to be reported by the device, or an AI operation required to be performed by the device.

Optionally, the data required to be reported by the device include at least one of: original channel measurement, a feature vector of CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

Optionally, the AI operation required to be performed by the device include at least one of: a CSI feedback, a beam management, or a positioning.

Optionally, the sending unit 1010 is further configured to: before sending the first information to the first network element, send fifth information to a fourth network element. The fifth information is used to request reporting of the AS data of the device.

Optionally, the fifth information includes at least one of: an AI intended to be performed by the device, a data reporting mode supported by the device, or a parameter supported by the device for reporting.

Optionally, the AI operations intended to be performed by the device include at least one of: a CSI feedback, a beam management, or a positioning.

Optionally, intended to be performed by the device include at least one of: a reporting mode for a control plane, or a reporting mode for a user plane.

Optionally, the parameter supported by the device for reporting include at least one of: original channel measurement, a feature vector of CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

Optionally, the device also includes a receiving unit 1020, which configured to: after sending the fifth information to the fourth network element, receive sixth information from the fourth network element. The sixth information indicates that the device is allowed to report data.

Optionally, the sixth information includes at least one of: an AI operation allowed to be performed by the device, a data reporting mode allowed to be performed by the device, or a parameter allowed to be reported by the device.

FIG. 11 is a schematic structural diagram illustrating a communication device according to an embodiment of the present disclosure. The communication device 1100 in FIG. 11 includes a receiving unit 1110.

The receiving unit 1110 is configured to receive first information from a terminal device. The first information includes AS data collected by the terminal device.

Optionally, the terminal device includes a second module. The receiving unit 1110 is specifically configured to: receive the first information from the second module through a second interface.

Optionally, the second module is a direct data collection client.

Optionally, the receiving unit 1110 is specifically configured to: receive the first information from a third module through a fifth interface. The third module is configured in a third network element.

Optionally, the third network element is an application service provider, and/or the third module is an indirect data collection client.

Optionally, the device further includes a sending unit 1120, which is configured to: before receiving the first information from the terminal device, send second information to the terminal device. The second information indicates configuration information for the terminal device to perform data reporting.

Optionally, the configuration information includes at least one of: data required to be reported by the terminal device, or an AI operation required to be performed by the terminal device.

Optionally, the data required to be reported by the terminal device includes at least one of: original channel measurement, a feature vector of CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

Optionally, the AI operation required to be performed by the terminal device includes at least one of: a CSI feedback, a beam management, or a positioning.

Optionally, the receiving unit 1110 is further configured to: before receiving the first information from the terminal device, receive third information from a second network element or a third network element. The third information is used to subscribe to a first event of the device.

Optionally, the first event is an AS data reporting event of the terminal device.

Optionally, the third information includes an event identification of the first event.

Optionally, definition of the first event includes at least one of: a function of an event, a description of the event, or a network element with a capability of the event.

Optionally, the receiving unit 1110 is further configured to: before receiving the first information from the terminal device, receive fourth information from a third network element. The fourth information indicates configuration information required to acquire the AS data of the terminal device.

Optionally, the fourth information includes at least one of: an event identification, data required to be reported by the terminal device, an AI operation required to be performed by the terminal device, or a pre-processing mode of the data.

Optionally, the device further includes a pre-processing unit 1130. The pre-processing unit 1130 is configured to: after receiving the first information from the terminal device, pre-process the AS data.

Optionally, the pre-processing includes at least one of: anonymization, or normalization.

Optionally, the device further includes a sending unit 1120, which is configured to: after receiving the first information from the terminal device, send seventh information to a second network element or a third network element. The seventh information includes the AS data collected by the terminal device.

Optionally, the device is a DCAF.

FIG. 12 is a schematic structural diagram illustrating a communication device according to an embodiment of the present disclosure. The communication device 1200 in FIG. 12 includes a sending unit 1210.

The sending unit 1210 is configured to send third information to a first network element. The third information is used to subscribe to a first event of the first network element.

Optionally, the first event is an AS data reporting event of a terminal device.

Optionally, the third information includes an event identification of the first event.

Optionally, definition of the first event includes at least one of: a function of an event, a description of the event, or a network element with a capability of the event.

Optionally, the device further includes a receiving unit 1220, which is configured to: after sending the third information to the first network element, receive seventh information from the first network element. The seventh information includes AS data collected by a terminal device.

Optionally, the device is a NF.

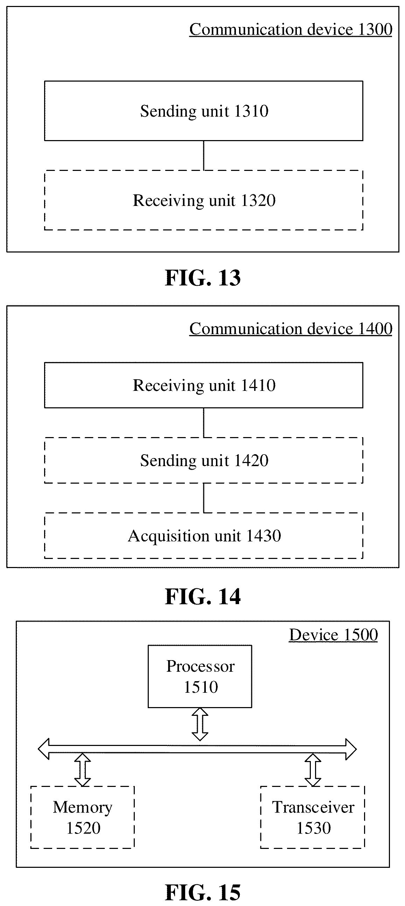

FIG. 13 is a schematic structural diagram illustrating a communication device according to an embodiment of the present disclosure. The communication device 1300 in FIG. 13 includes a sending unit 1310.

The sending unit 1310 is configured to send third information to the first network element. The third information is used to subscribe to a first event of the first network element.

Optionally, the first event is an AS data reporting event of a terminal device.

Optionally, the third information includes an event identification of the first event.

Optionally, definition of the first event includes at least one of: a function of an event, a description of the event, or a network element with a capability of the event.

Optionally, the sending unit 1310 further configured to: before sending the third information to the first network element, send fourth information to the first network element. The fourth information indicates configuration information required to acquire AS data of a terminal device.

Optionally, the fourth information includes at least one of: an event identification, data required to be reported by the terminal device, an AI operation required to be performed by the terminal device, or a pre-processing mode of the data.

Optionally, the device further includes a receiving unit 1320, which is configured to: after sending the third information to the first network element, receive seventh information from the first network element. The seventh information includes AS data collected by a terminal device.

Optionally, the device is an ASP.

FIG. 14 is a schematic structural diagram illustrating a communication device according to an embodiment of the present disclosure. The communication device 1400 in FIG. 14 includes a receiving unit 1410.

The receiving unit 1410 is configured to receive fifth information from a terminal device. The fifth information is used to request reporting of access stratum (AS) data of the terminal device.

Optionally, the fifth information includes at least one of: an AI operation intended to be performed by the terminal device, a data reporting mode supported by the terminal device, or a parameter supported by the terminal device for reporting.

Optionally, the AI operation intended to be performed by the terminal device include at least one of: a CSI feedback, a beam management, or a positioning.

Optionally, the data reporting mode supported by the terminal device include at least one of: a reporting mode for a control plane, or a reporting mode for a user plane.

Optionally, the parameter supported by the terminal device for reporting include at least one of: original channel measurement, a feature vector of CSI, a compressed bit stream, an RSRP of layer 1, best K beam information, measurement information of a positioning reference signal, a channel impulse response, a power delay profile, a line-of-sight state, a non-line-of-sight state, TOA, or position information, herein K is an integer.

Optionally, the device further includes a sending unit 1420, which is configured to: after receiving the fifth information from the terminal device, send sixth information to the terminal device. The sixth information indicates that the terminal device is allowed to report data.

Optionally, the sixth information includes at least one of: an AI operation allowed to be performed by the terminal device, a data reporting mode allowed to be performed by the terminal device, or a parameter allowed to be reported by the terminal device.

Optionally, the device further includes an acquisition unit 1430, which is configured to: after receiving the fifth information from the terminal device, acquire eighth information through a fifth network element. The eighth information indicates subscription information of the terminal device.

Optionally, the eighth information includes at least one of: an AI operation allowed to be performed by the terminal device, a data reporting mode allowed to be performed by the terminal device, or a parameter allowed to be reported by the terminal device.

Optionally, the fifth network element is a UDM.

Optionally, the device is an AMF.

FIG. 15 is a schematic structural diagram illustrating a device according to an embodiment of the present disclosure. A dashed line illustrated in FIG. 15 indicates that a unit or module is optional. The device 1500 may be configured to implement the method described in the above method embodiments. The device 1500 may be a chip or a communication device.

The device 1500 may include at least one processor 1510. The processor 1510 may support the device 1500 to implement the methods described in the previous method embodiments. The device 1510 may be a general-purpose processor or a dedicated processor. For example, the processor may be a central processing unit (CPU). Alternatively, the processor may also be other general-purpose processors, a digital signal processor (DSP), an application specific integrated circuit (ASIC), a field programmable gate array (FPGA), or other programmable logic device, discrete gate or transistor logic device, or discrete hardware component, etc. The general-purpose processor may be a microprocessor or the processor may also be any conventional processor, etc.

The device 1500 may further include at least one memory 1520. A program is stored on the memory 1520, and may be executed by the processor 1510, so as to cause the processor 1510 to perform the method described in the above embodiments. The memory 1520 may be independent of the processor 1510 or may be integrated into the processor 1510.

The device 1500 may also include a transceiver 1530. The processor 1510 may communicate with another device or a chip through the transceiver 1530. For example, the processor 1510 may transmit and receive data to and from the other device or the chip through the transceiver 1530.

An embodiment of the present disclosure further provides a computer-readable storage medium configured to store a program. The computer-readable storage medium may be applied to the communication device provided by the embodiments of the present disclosure, and the program causes a computer to perform the method performed by the communication device in each embodiment of the present disclosure.

An embodiment of the present disclosure further provides a computer program product. The computer program product includes a program. The computer program product may be applied to the communication device provided by the embodiments of the present disclosure, and the program causes a computer to perform the method performed by the communication device in each embodiment of the present disclosure.

An embodiment of the present disclosure further provides a computer program. The computer program may be applied to the communication device provided by the embodiments of the present disclosure, and the computer program causes a computer to perform the method performed by the communication device in each embodiment of the present disclosure.

It should be understood that, in the embodiments of the present disclosure, "B corresponding to A" represents that B is associated with A, and B may be determined based on A. However, it should also be understood that determining B based on A does not mean determining B solely based on A, but may also be determined based on A and/or other information.

It should be understood that the term herein "and/or" describes an association relationship between associated objects, and represents that three relationships may exist. For example, A and/or B may represent three situations: independent existence of A, existence of both A and B, and independent existence of B. In addition, the character "/" used herein usually represents that the associated objects before and after the character "/" form an "or" relationship.

It should be understood that, in various embodiments of the present disclosure, the serial numbers of the processes do not imply the order of execution, and the order of execution of the processes shall be determined by their function and intrinsic logic, and shall not constitute any limitation to the processes implemented in the embodiments of the present disclosure.

In the several embodiments provided by present disclosure, it should be understood that, the disclosed system, device, and method may be implemented in other ways. For example, the device embodiments described above are merely illustrative. For example, the division of the units is only a logical function division, and there may be other divisions in an actual implementation. For example, multiple units or components can be combined or can be integrated into another system, or some features can be ignored or not implemented. In addition, the displayed or discussed mutual coupling, direct coupling, or communication connection may be indirect coupling or communication connection through some interfaces, devices or units, and may be in electrical, mechanical, or other forms.

The units described as separate components may or may not be physically separated, and the components displayed as units may or may not be physical units. That is, they may be located at one position, or they may be distributed on multiple network units. Some or all of the units may be selected according to actual needs to achieve the objectives of the solutions of the embodiments.

In addition, the functional units in various embodiments of the present disclosure may be integrated into one processing unit, or each unit may exist alone physically, or two or more units may be integrated into one unit.

The above embodiments of the present disclosure may fully or partially implemented by software, hardware, firmware or any combination thereof. When implemented in software, the embodiments may be fully or partially implemented in the form of a computer program product. The computer program product includes one or more computer instructions. When the computer program instructions are loaded and executed on a computer, all or part of the processes or functions according to the embodiments of the present disclosure are generated. The computer may be a general-purpose computer, a dedicated computer, a computer network, or other programmable devices. The computer instructions may be stored in a computer-readable storage medium, or may be transmitted from one computer-readable storage medium to another computer-readable storage medium. For example, the computer instructions may be transmitted from one website site, computer, server, or data center to another website site, computer, server, or data center through a wired (e.g., a coaxial cable, an optical fiber, a digital subscriber line (DSL)) or a wireless (e.g., infrared, wireless, microwave, etc.) manner. The computer-readable storage medium may be any available medium that a computer can access, or may be a data storage device such as a server or a data center that includes one or more available media. The available medium may be a magnetic medium (such as, a floppy disk, a hard drive, a magnetic tape), an optical medium (e.g., a digital video disc (DVD)), or a semiconductor medium (e.g., a solid state disk (SSD)) and the like.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A method for communication, comprising:
sending, by a terminal device, first information to a first network element, wherein the first information comprises access stratum (AS) data collected by the terminal device.

2. The method of claim 1, wherein the terminal device comprises a first module and a second module; sending, by the terminal device, the first information to the first network element comprises:
sending, by the first module, the AS data to the second module through a first interface; and
sending, by the second module, the first information to the first network element through a second interface.

3. The method of claim 1, wherein the terminal device comprises a first module and a second module; sending, by the terminal device, the first information to the first network element comprises:
sending, by the first module, the AS data to an application layer of the terminal device;
sending, by the application layer, the AS data to the second module through a third interface; and
sending, by the second module, the first information to the first network element through a second interface.

4. The method of claim 1, wherein the terminal device comprises a first module; sending, by the terminal device, the first information to the first network element comprises:
sending, by the first module, the AS data to an application layer of the terminal device;
sending, by the application layer, the AS data to a third module through a fourth interface, wherein the third module is configured in a third network element; and
sending, by the third module, the first information to the first network element through a fifth interface.

5. The method of claim 4, wherein the third network element is an application service provider, and/or the third module is an indirect data collection client.

6. The method of any one of claims 2 to 5, wherein the first module is a modem, and/or the second module is a direct data collection client, and/or the first interface is an Rx interface.

7. The method of any one of claims 1 to 6, wherein the AS data comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

8. The method of any one of claims 1 to 7, wherein before sending, by the terminal device, the first information to the first network element, the method further comprises:
receiving, by the terminal device, second information from the first network element, wherein the second information indicates configuration information for the terminal device to perform data reporting.

9. The method of claim 8, wherein the configuration information comprises at least one of:
data required to be reported by the terminal device, or an artificial intelligence (AI) operation required to be performed by the terminal device.

10. The method of claim 9, wherein the data required to be reported by the terminal device comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

11. The method of claim 9, wherein the AI operation required to be performed by the terminal device comprises at least one of: a CSI feedback, a beam management, or a positioning.

12. The method of any one of claims 1 to 11, wherein before sending, by the terminal device, the first information to the first network element, the method further comprises:
sending, by the terminal device, fifth information to a fourth network element, wherein the fifth information is used to request reporting of the AS data of the terminal device.

13. The method of claim 12, wherein the fifth information comprises at least one of:
an artificial intelligence (AI) operation intended to be performed by the terminal device, a data reporting mode supported by the terminal device, or a parameter supported by the terminal device for reporting.

14. The method of claim 13, wherein the AI operation intended to be performed by the terminal device comprises at least one of: a channel state information (CSI) feedback, a beam management, or a positioning.

15. The method of claim 13, wherein the data reporting mode supported by the terminal device comprises at least one of: a reporting mode for a control plane, or a reporting mode for a user plane.

16. The method of claim 13, wherein the parameter supported by the terminal device for reporting comprises at least one of:
original channel measurement, a feature vector of current CSI, a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

17. The method of any one of claims 12 to 16, wherein after sending, by the terminal device, the fifth information to the fourth network element, the method further comprises:
receiving, by the terminal device, sixth information from the fourth network element, wherein the sixth information indicates that the terminal device is allowed to report data.

18. The method of claim 17, wherein the sixth information comprises at least one of:
an artificial intelligence (AI) operation allowed to be performed by the terminal device, a data reporting mode allowed to be performed by the terminal device, or a parameter allowed to be reported by the terminal device.

19. A method for communication, comprising:
receiving, by a first network element, first information from a terminal device, wherein the first information comprises access stratum (AS) data collected by the terminal device.

20. The method of claim 19, wherein the terminal device comprises a second module; receiving, by the first network element, the first information from the terminal device comprises:
receiving, by the first network element, the first information from the second module through a second interface.

21. The method of claim 20, wherein the second module is a direct data collection client.

22. The method of claim 19, wherein receiving, by the first network element, the first information from the terminal device comprises:
receiving, by the first network element, the first information from a third module through a fifth interface, wherein the third module is configured in a third network element.

23. The method of claim 22, wherein the third network element is an application service provider, and/or the third module is an indirect data collection client.

24. The method of any one of claims 19 to 23, wherein before receiving, by the first network element, the first information from the terminal device, the method further comprises:
sending, by the first network element, second information to the terminal device, wherein the second information indicates configuration information for the terminal device to perform data reporting.

25. The method of claim 24, wherein the configuration information comprises at least one of:
data required to be reported by the terminal device, or an artificial intelligence (AI) operation required to be performed by the terminal device.

26. The method of claim 25, wherein the data required to be reported by the terminal device comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

27. The method of claim 25, wherein the AI operation required to be performed by the terminal device comprises at least one of: a CSI feedback, a beam management, or a positioning.

28. The method of any one of claims 19 to 27, wherein before receiving, by the first network element, the first information from the terminal device, the method further comprises:
receiving, by the first network element, third information from a second network element or a third network element, wherein the third information is used to subscribe to a first event of the first network element.

29. The method of claim 28, wherein the first event is an AS data reporting event of the terminal device.

30. The method of claim 28 or 29, wherein the third information comprises an event identification of the first event.

31. The method of any one of claims 28 to 30, wherein definition of the first event comprises at least one of: a function of an event, a description of the event, or a network element with a capability of the event.

32. The method of any one of claims 19 to 31, wherein before receiving, by the first network element, the first information from the terminal device, the method further comprises:
receiving, by the first network element, fourth information from a third network element, wherein the fourth information indicates configuration information required to acquire the AS data of the terminal device.

33. The method of claim 32, wherein the fourth information comprises at least one of:
an event identification, data required to be reported by the terminal device, an artificial intelligence (AI) operation required to be performed by the terminal device, or a pre-processing mode of the data.

34. The method of any one of claims 19 to 33, wherein after receiving, by the first network element, the first information from the terminal device, the method further comprises:
pre-processing, by the first network element, the AS data.

35. The method of claim 34, wherein the pre-processing comprises at least one of: anonymization, or normalization.

36. The method of any one of claims 19 to 35, wherein after receiving, by the first network element, the first information from the terminal device, the method further comprises:
sending, by the first network element, seventh information to a second network element or a third network element, wherein the seventh information comprises the AS data collected by the terminal device.

37. The method of any one of claims 19 to 36, wherein the first network element is a data collection application function (DCAF).

38. A method for communication, comprising:
sending, by a second network element, third information to a first network element, wherein the third information is used to subscribe to a first event of the first network element.

39. The method of claim 38, wherein the first event is an access stratum (AS) data reporting event of a terminal device.

40. The method of claim 38 or 39, wherein the third information comprises an event identification of the first event.

41. The method of any one of claims 38 to 40, wherein definition of the first event comprises at least one of: a function of an event, a description of the event, or a network element with a capability of the event.

42. The method of any one of claims 38 to 41, wherein after sending, by the second network element, the third information to the first network element, the method further comprises:
receiving, by the second network element, seventh information from the first network element, wherein the seventh information comprises access stratum (AS) data collected by a terminal device.

43. The method of any one of claims 38 to 42, wherein the second network element is a network function (NF).

44. A method for communication, comprising:
sending, by a third network element, third information to a first network element, wherein the third information is used to subscribe to a first event of the first network element.

45. The method of claim 44, wherein the first event is an access stratum (AS) data reporting event of a terminal device.

46. The method of claim 44 or 45, wherein the third information comprises an event identification of the first event.

47. The method of any one of claims 44 to 46, wherein definition of the first event comprises at least one of: a function of an event, a description of the event, or a network element with a capability of the event.

48. The method of any one of claims 44 to 47, wherein before sending, by the third network element, the third information to the first network element, the method further comprises:
sending, by the third network element, fourth information to the first network element, wherein the fourth information indicates configuration information required to acquire access stratum (AS) data of a terminal device.

49. The method of claim 48, wherein the fourth information comprises at least one of:
an event identification, data required to be reported by the terminal device, an artificial intelligence (AI) operation required to be performed by the terminal device, or a pre-processing mode of the data.

50. The method of any one of claims 44 to 49, wherein after sending, by the third network element, the third information to the first network element, the method further comprises:
receiving, by the third network element, seventh information from the first network element, wherein the seventh information comprises access stratum (AS) data collected by a terminal device.

51. The method of any one of claims 44 to 50, wherein the third network element is an application service provider (ASP).

52. A method for communication, comprising:
receiving, by a fourth network element, fifth information from a terminal device, wherein the fifth information is used to request reporting of access stratum (AS) data of the terminal device.

53. The method of claim 52, wherein the fifth information comprises at least one of:
an artificial intelligence (AI) operation intended to be performed by the terminal device, a data reporting mode supported by the terminal device, or a parameter supported by the terminal device for reporting.

54. The method of claim 53, wherein the AI operation intended to be performed by the terminal device comprises at least one of: a channel state information (CSI) feedback, a beam management, or a positioning.

55. The method of claim 53, wherein the data reporting mode supported by the terminal device comprises at least one of: a reporting mode for a control plane, or a reporting mode for a user plane.

56. The method of claim 53, wherein the parameter supported by the terminal device for reporting comprises at least one of:
original channel measurement, a feature vector of current CSI, a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

57. The method of any one of claims 52 to 56, wherein after receiving, by the fourth network element, the fifth information from the terminal device, the method further comprises:
sending, by the fourth network element, sixth information to the terminal device, wherein the sixth information indicates that the terminal device is allowed to report data.

58. The method of claim 57, wherein the sixth information comprises at least one of:
an artificial intelligence (AI) operation allowed to be performed by the terminal device, a data reporting mode allowed to be performed by the terminal device, or a parameter allowed to be reported by the terminal device.

59. The method of any one of claims 52 to 58, wherein after receiving, by the fourth network element, the fifth information from the terminal device, the method further comprises:
acquiring, by the fourth network element, eighth information through a fifth network element, wherein the eighth information indicates subscription information of the terminal device.

60. The method of claim 59, wherein the eighth information comprises at least one of:
an artificial intelligence (AI) operation allowed to be performed by the terminal device, a data reporting mode allowed to be performed by the terminal device, or a parameter allowed to be reported by the terminal device.

61. The method of claim 60, wherein the fifth network element is a unified data management (UDM).

62. The method of any one of claims 52 to 61, wherein the fourth network element is a mobility management function (AMF).

63. A device for communication, comprising:
a sending unit, configured to send first information to a first network element, wherein the first information comprises access stratum (AS) data collected by the device.

64. The device of claim 63, wherein the device comprises: a first module and a second module, wherein the sending unit is specifically configured to:
send, by the first module, the AS data to the second module through a first interface; and
send, by the second module, the first information to the first network element through a second interface.

65. The device of claim 63, wherein the device comprises: a first module and a second module, wherein the sending unit is specifically configured to:
send, by the first module, the AS data to an application layer of the device;
send, by the application layer, the AS data to the second module through a third interface; and
send, by the second module, the first information to the first network element through a second interface.

66. The device of claim 63, wherein the device comprises: a first module, wherein the sending unit is specifically configured to:
send, by the first module, the AS data to an application layer of the device;
send, by the application layer, the AS data to a third module through a fourth interface, wherein the third module is configured in a third network element; and
send, by the third module, the first information to the first network element through a fifth interface.

67. The device of claim 66, wherein the third network element is an application service provider, and/or the third module is an indirect data collection client.

68. The device of any one of claims 64 to 67, wherein the first module is a modem, and/or the second module is a direct data collection client, and/or the first interface is an Rx interface.

69. The device of any one of claims 63 to 68, wherein the AS data comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

70. The device of any one of claims 63 to 69, further comprising: a receiving unit, configured to:
before sending the first information to the first network element, receive second information from the first network element, wherein the second information indicates configuration information for the device to perform data reporting.

71. The device of claim 70, wherein the configuration information comprises at least one of:
data required to be reported by the device, or an artificial intelligence (AI) operation required to be performed by the device.

72. The device of claim 71, wherein the data required to be reported by the device comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

73. The device of claim 71, wherein the AI operation required to be performed by the device comprises at least one of: a CSI feedback, a beam management, or a positioning.

74. The device of any one of claims 63 to 73, wherein the sending unit is further configured to:
before sending the first information to the first network element, send fifth information to a fourth network element, wherein the fifth information is used to request reporting of the AS data of the device.

75. The device of claim 74, wherein the fifth information comprises at least one of:
an artificial intelligence (AI) intended to be performed by the device, a data reporting mode supported by the device, or a parameter supported by the device for reporting.

76. The device of claim 75, wherein the AI operation intended to be performed by the device comprises at least one of: a channel state information (CSI) feedback, a beam management, or a positioning.

77. The device of claim 76, wherein the data reporting mode supported by the device comprises at least one of: a reporting mode for a control plane, or a reporting mode for a user plane.

78. The device of claim 76, wherein the parameter supported by the device for reporting comprises at least one of:
original channel measurement, a feature vector of current CSI, a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

79. The device of any one of claims 74 to 78, further comprising: a receiving unit, configured to:
after sending the fifth information to the fourth network element, receive sixth information from the fourth network element, wherein the sixth information indicates that the device is allowed to report data.

80. The device of claim 79, wherein the sixth information comprises at least one of:
an artificial intelligence (AI) operation allowed to be performed by the device, a data reporting mode allowed to be performed by the device, or a parameter allowed to be reported by the device.

81. A device for communication, comprising:
a receiving unit, configured to receive first information from a terminal device, wherein the first information comprises access stratum (AS) data collected by the terminal device.

82. The device of claim 81, wherein the terminal device comprises a second module; the receiving unit is specifically configured to:
receive the first information from the second module through a second interface.

83. The device of claim 82, wherein the second module is a direct data collection client.

84. The device of claim 81, wherein the receiving unit is specifically configured to:
receive the first information from a third module through a fifth interface, wherein the third module is configured in a third network element.

85. The device of claim 84, wherein the third network element is an application service provider, and/or the third module is an indirect data collection client.

86. The device of any one of claims 81 to 85, further comprising a sending unit, configured to:
before receiving the first information from the terminal device, send second information to the terminal device, wherein the second information indicates configuration information for the terminal device to perform data reporting.

87. The device of claim 86, wherein the configuration information comprises at least one of:
data required to be reported by the terminal device, or an artificial intelligence (AI) operation required to be performed by the terminal device.

88. The device of claim 87, wherein the data required to be reported by the terminal device comprises at least one of:
original channel measurement, a feature vector of current channel state information (CSI), a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

89. The device of claim 87, wherein the AI operation required to be performed by the terminal device comprises at least one of: a CSI feedback, a beam management, or a positioning.

90. The device of any one of claims 81 to 89, wherein the receiving unit is further configured to:
before receiving the first information from the terminal device, receive third information from a second network element or a third network element, wherein the third information is used to subscribe to a first event of the device.

91. The device of claim 90, wherein the first event is an AS data reporting event of the terminal device.

92. The device of claim 90 or 91, wherein the third information comprises an event identification of the first event.

93. The device of any one of claims 90 to 92, wherein definition of the first event comprises at least one of: a function of an event, a description of the event, or a network element with a capability of the event.

94. The device of any one of claims 81 to 93, wherein the receiving unit is further configured to:
before receiving the first information from the terminal device, receive fourth information from a third network element, wherein the fourth information indicates configuration information required to acquire the AS data of the terminal device.

95. The device of claim 94, wherein the fourth information comprises at least one of:
an event identification, data required to be reported by the terminal device, an artificial intelligence (AI) operation required to be performed by the terminal device, or a pre-processing mode of the data.

96. The device of any one of claims 81 to 95, wherein the device further comprises a pre-processing unit, configured to:
after receiving the first information from the terminal device, pre-process the AS data.

97. The device of claim 96, wherein the pre-processing comprises at least one of: anonymization, or normalization.

98. The device of any one of claims 81 to 97, further comprising a sending unit, configured to:
after receiving the first information from the terminal device, send seventh information to a second network element or a third network element, wherein the seventh information comprises the AS data collected by the terminal device.

99. The device of any one of claims 81 to 98, wherein the device is a data collection application function (DCAF).

100. A device for communication, comprising:
a sending unit, configured to: send third information to a first network element, wherein the third information is used to subscribe to a first event of the first network element.

101. The device of claim 100, wherein the first event is an access stratum (AS) data reporting event of a terminal device.

102. The device of claim 100 or 101, wherein the third information comprises an event identification of the first event.

103. The device of any one of claims 100 to 102, wherein definition of the first event comprises at least one of: a function of an event, a description of the event, or a network element with a capability of the event.

104. The device of any one of claims 100 to 103, further comprising a receiving unit, configured to:
after sending the third information to the first network element, receive seventh information from the first network element, wherein the seventh information comprises access stratum (AS) data collected by a terminal device.

105. The device of any one of claims 100 to 104, wherein the second network element is a network function (NF).

106. A device for communication, comprising:
a sending unit, configured to send third information to a first network element, wherein the third information is used to subscribe to a first event of the first network element.

107. The device of claim 106, wherein the first event is an access stratum (AS) data reporting event of a terminal device.

108. The device of claim 106 or 107, wherein the third information comprises an event identification of the first event.

109. The device of any one of claims 106 to 108, wherein definition of the first event comprises at least one of: a function of an event, a description of the event, or a network element with a capability of the event.

110. The device of any one of claims 106 to 109, wherein the sending unit further configured to:
before sending the third information to the first network element, send fourth information to the first network element, wherein the fourth information indicates configuration information required to acquire access stratum (AS) data of a terminal device.

111. The device of claim 110, wherein the fourth information comprises at least one of:
an event identification, data required to be reported by the terminal device, an artificial intelligence (AI) operation required to be performed by the terminal device, or a pre-processing mode of the data.

112. The device of any one of claims 106 to 111, further comprising a receiving unit, configured to:
after sending the third information to the first network element, receive seventh information from the first network element, wherein the seventh information comprises access stratum (AS) data collected by a terminal device.

113. The device of any one of claims 106 to 112, wherein the device is an application service provider (ASP).

114. A device for communication, comprising:
a receiving unit, configured to receive fifth information from a terminal device, wherein the fifth information is used to request reporting of access stratum (AS) data of the terminal device.

115. The device of claim 114, wherein the fifth information comprises at least one of:
an artificial intelligence (AI) operation intended to be performed by the terminal device, a data reporting mode supported by the terminal device, or a parameter supported by the terminal device for reporting.

116. The device of claim 115, wherein the AI operation intended to be performed by the terminal device comprises at least one of: a channel state information (CSI) feedback, a beam management, or a positioning.

117. The device of claim 115, wherein the data reporting mode supported by the terminal device comprises at least one of: a reporting mode for a control plane, or a reporting mode for a user plane.

118. The device of claim 115, wherein the parameter supported by the terminal device for reporting comprises at least one of:
original channel measurement, a feature vector of current CSI, a compressed bit stream, a reference signal receiving power (RSRP) of layer 1, best K beam information, measurement information of a positioning reference signal, a channel impulse response, a power delay profile, a line-of-sight state, a non-line-of-sight state, time of arrival (TOA), or position information, wherein K is an integer.

119. The device of any one of claims 114 to 118, further comprising a sending unit, configured to:
after receiving the fifth information from the terminal device, send sixth information to the terminal device, wherein the sixth information indicates that the terminal device is allowed to report data.

120. The device of claim 119, wherein the sixth information comprises at least one of:
an artificial intelligence (AI) operation allowed to be performed by the terminal device, a data reporting mode allowed to be performed by the terminal device, or a parameter allowed to be reported by the terminal device.

121. The device of any one of claims 114 to 120, further comprises an acquisition unit, configured to:
after receiving the fifth information from the terminal device, acquire eighth information through a fifth network element, wherein the eighth information indicates subscription information of the terminal device.

122. The device of claim 121, wherein the eighth information comprises at least one of:
an artificial intelligence (AI) operation allowed to be performed by the terminal device, a data reporting mode allowed to be performed by the terminal device, or a parameter allowed to be reported by the terminal device.

123. The device of claim 122, wherein the fifth network element is a unified data management (UDM).

124. The device of any one of claims 114 to 123, wherein the fourth network element is a mobility management function (AMF).

125. A device for communication, comprising: a memory and a processor, wherein the memory is configured to store a program, and a processor is configured to call the program from the memory to perform the method of any one of claims 1 to 62.

126. A chip, comprising: a processor configured to call a program from a memory to cause a device equipped with the chip to perform the method of any one of claims 1 to 62.

127. A computer-readable storage medium having stored thereon a program, wherein the program causes a computer to perform the method of any one of claims 1 to 62.

128. A computer program product comprising a program, wherein the program causes a computer to perform the method of any one of claims 1 to 62.

129. A computer program causing a computer to perform the method of any one of claims 1 to 62.
